# EUROPÄISCHE PATENTSCHRIFT

(11) **EP 0 897 621 B1**
(45) Veröffentlichungstag und Bekanntmachung des Hinweises auf die Patenterteilung: **16.08.2001**
(21) Anmeldenummer: 97925836.5
(22) Anmeldetag: 05.05.1997
(51) Int. Cl.: H04B 1/38, H04Q 7/32, H04M 1/72

(54) **NETZUNGEBUNDENE TELEKOMMUNIKATIONSANLAGE**
TELECOMMUNICATIONS SYSTEM NOT CONNECTED TO THE NETWORK
SYSTEME DE TELECOMMUNICATIONS NON RELIE AU RESEAU

(30) Priorität: 08.05.1996 DE 19618532
(43) Veröffentlichungstag der Anmeldung: 24.02.1999
(73) Patentinhaber: SIEMENS AKTIENGESELLSCHAFT, 80333 München (DE)
(72) Erfinder: BÜSKEN, Hermann, D-46325 Borken (DE)
(86) Internationale Anmeldenummer: DE9700911
(87) Internationale Veröffentlichungsnummer: WO9742717

(56) Entgegenhaltungen:
- EP-A- 0 482 503
- DE-C- 4 408 972
- FR-A- 2 630 603
- US-A- 5 422 934

## Beschreibung

Die Erfindung betrifft eine netzungebundene Telekommunikationsanlage mit mindestens zwei Endgeräten und mit einer zentralen Vermittlungseinrichtung, um auf Veranlassung eines Endgeräts eine Verbindung zu mindestens einem anderen Endgerät auf- bzw. abzubauen. Netzungebunden bedeutet hierbei, daß die Telekommunikationsanlage autark betrieben werden kann und nicht als Teilnehmer an einem Kommunikationsnetz betrieben wird. Ferner betrifft die Erfindung eine Telekommunikationseinrichtung.

Netzgebundene Telekommunikationsanlagen sind als sogenannte Haustelefonanlagen oder Gegensprechanlagen bekannt. Solche Anlagen zeichnen sich dadurch aus, daß sie sehr aufwendig zu installieren sind. Andere bekannte Anlagen ermöglichen nur eine schlechte Übertragungsqualität, insbesondere eine schlechte Sprachqualität.

Insbesondere bei einer zeitlich begrenzten Benutzung bekannter netzungebundener Telekommunikationsanlagen, die eine gute Sprachqualität ermöglichen, ist der Installationsaufwand zu groß und daher nicht wirtschaftlich. Auf Messen wird daher beispielsweise von einigen Firmen auch für den Interntelefonverkehr ein Mobilfunknetz verwendet. In Kaufhäusern werden für reine Intern-Gespräche netzgebundene Telekommunikations-Nebenstellenanlagen verwendet. Insbesondere durch Datenverbindungen wird hierbei die an ein öffentliches Telefonnetz angeschlossene Vermittlungsanlage stark belastet und außerdem sind relativ teuere Endgeräte erforderlich.

In Zeltlagern, am Strand oder auf Campingplätzen ist Kommunikation derzeit üblicherweise nur per Funkgerät oder mit Hilfe von öffentlichen Landmobilfunksystemen möglich.

Aus der DE 44 08 972 C1 ist eine netzgebundene Schnurlos-Telekommunikationsanlage bekannt, mit der eine Türstation unter Verwendung eines DECT-Mobilteils realisierbar ist. Das als Türstation ausgebildete DECT-Mobilteil weist eine Klingel, eine Sprechverbindung und eine Türöffnerfunktion auf und ist mit einer Basisstation und zugehörigen Handapparaten durch drahtlose Telekommunikation verbunden.

Aus der FR 2 630 603 A1 ist ein Schutzhelm mit einer Antenne, einer Sende-/Empfangseinrichtung, einem Akkumulator, Mikrofon sowie Lautsprecher bekannt, derart ausgestaltet, daß er die Funktion eines Funkgerätes bereitstellt, das ohne Einsatz der Hände benutzt werden kann.

Aus der EP 0 497 490 A2 ist eine drahtlose Nebenstelleneinrichtung bekannt, mit einer zentralen Steuereinheit und ortsgebundenen Terminals, das sich selbst auf die Funkumgebung optimal konfiguriert, wobei die zentrale Steuereinheit dazu verschiedene Funknachrichten mit den Terminals austauscht, um zu bestimmen welche der Terminals als Verstärker für die Verbindung zwischen zentraler Steuereinheit und weiter entfernten Terminals dienen sollen.

Diese Aufgabe löst die Erfindung durch eine Telekommunikationsanlage mit den Merkmalen des Anspruches 1. Die Unteransprüche geben vorteilhafte Weiterbildungen der Erfindung an.

Erfindungsgemäß ist die zentrale Vermittlungseinrichtung zum Auf- bzw. Abbauen von Verbindungen zwischen Endgeräten der Telekommunikationsanlage tragbar ausgestaltet. Sie kann somit, wie beispielsweise ein Rundfunkempfänger, an beliebigen Orten betrieben werden. Die Stromversorgung kann hierzu durch Batterien, über die Bordversorgung eines Kraftfahrzeuges oder, falls verfügbar, über einen Energieversorgungs-Netzanschluß erfolgen. Durch Sende-/Empfangseinrichtungen in der zentralen Vermittlungseinrichtung sowie in Endgeräten ist es auf einfache Weise möglich, zwischen einem Endgerät und der zentralen Vermittlungseinrichtung - und somit auch zwischen mehreren Endgeräten - ohne Installationsaufwand eine Verbindung aufzubauen.

Eine hohe Störsicherheit und eine gute Übertragungsqualität wird hierbei durch Verwendung eines digitalen Schnurlos-Telekommunikationsübertragungsverfahrens für die Luftschnittstelle zwischen Endgerät und Vermittlungseinrichtung erreicht. Vorzugsweise wird hierfür ein Übertragungsverfahren gemäß dem digitalen Schnurlostelekommunikationsstandard DECT (Digital Enhanced Cordless Telecommunication) sichergestellt. Geeignete Sende-/Empfangseinrichtungen für die zentrale Vermittlungseinrichtung sowie für die Endgeräte sind zu günstigen Bedingungen verfügbar, so daß eine erfindungsgemäße netzungebundene Telekommunikationsanlage wirtschaftlich realisierbar ist.

In einer günstigen Weiterbildung der Erfindung bildet ein Endgerät mit der zentralen Vermittlungseinrichtung eine Einheit. Dadurch wird ein Gehäuse für ein Endgerät eingespart, so daß unnötiger Ballast vermieden wird.

In einer besonders günstigen Weiterbildung der Erfindung ist ein Endgerät mit Sende-/Empfangseinrichtung als am Kopf tragbare Hör-/Sprechgarnitur ausgebildet. Mit einem derart ausgestalteten Endgerät ist eine Kommunikation ohne Beeinträchtigung der Bewegungsfreiheit des Benutzers möglich. Insbesondere wenn in einer Weiterbildung der Erfindung die Hör-/Sprechgarnitur in eine Kopfbedeckung, wie z.B. einen Schutzhelm integriert ist, kann auf einfache Weise beispielsweise ein Monteur auf einer Baustelle mit dem Kranführer kommunizieren oder ein Rad-, Motorrad- oder Automobilrennfahrer mit seinem Betreuer telefonieren. Außerdem kann ein Fahrlehrer aus einem Kraftfahrzeug mit einem Fahrschüler auf einem Motorrad telefonieren.

Im letztgenannten Beispielsfall, aber auch in anderen denkbaren Konstellationen ist es besonders günstig, wenn die zentrale Vermittlungseinrichtung an eine Sende-/Empfangsantenne eines Kraftfahrzeugs angeschlossen ist, mindestens aber über die Stromversorgung dieses Kraftfahrzeugs mit Energie versorgt wird.

In einer Weiterbildung der Erfindung ist als Endgerät ein üblicherweise drahtgebunden an eine Telekommunikationsanschlußeinheit anzuschließendes Endgerät vorgesehen, wobei die hierfür vorgesehene Telekommunikationsanschlußeinheit eine Sende-/Empfangseinrichtung hat, um eine schnurlose Verbindung zu der zentralen Vermittlungseinrichtung zu ermöglichen. Wenn beispielsweise in einer Weiterbildung der Erfindung als schnurgebunden anzuschließendes Endgerät ein Computer mit Modem vorgesehen ist, ist es möglich, mit Hilfe einer solchen erfindungsgemäßen netzungebundenen Telekommunikationsanlage sehr einfach Daten zwischen mehreren Computern auszutauschen.

Eine solche Telekommunikationsanlage ermöglicht es u.a., in irgendeinem Raum, der gegebenenfalls nicht einmal eine Stromversorgung genötigt, einen EDV-Lehrgang mit mehreren vernetzten EDV-Arbeitsplätzen abzuhalten.

Die Anzahl der an eine zentrale Vermittlungseinrichtung anschließbaren Endgeräte ist durch die Größe des Koppelfeldes und die Anzahl der zur Schnurlostelefonie bereitstehenden Frequenzkanäle begrenzt.

Ein weiterer Aspekt der Erfindung betrifft eine Telekommunikationseinrichtung (Telekommunikationsanlage) mit einer in ein Fahrzeug eingebauten Basisstation, die als zentrale Vermittlungseinrichtung fungiert, und mit einem von einem Benutzer während des Betriebs freihändig am Körper tragbaren Endgerät, das ein Mikrofon, einen Kopfhörer und eine Sende/Empfangseinrichtung zum bedarfsweisen Auf- oder Abbauen einer Verbindung zu einer Sende-/Empfangseinrichtung der Basisstation unter Verwendung eines Übertragungsverfahrens gemäß dem digitalen Schnurlostelekommunikationsstandard DECT hat. Ein solches Endgerät kann beispielsweise ein zuvor beschriebener Helm sein, ggf. mit über Leitung hiermit verbindbarem Zusatzgerät. Diese Telekommunikationseinrichtung ist als Hör-/Sprechgarnitur eines Funkendgerätes vorgesehen, wozu die Basisstation mit einer weiteren Sende-/Empfangseinrichtung für einen Funkverkehr größerer Reichweite verbunden ist. Die beschriebene Gesamtkonstellation einer Telekommunikationseinrichtung kann beispielsweise eine mobile Funkstation für Polizeifunk oder Feuerwehrfunk sein, aber auch ein Endgerät eines öffentlichen, landgestützten Mobilfunknetzes. Mit einer solchen Telekommunikationseinrichtung kann sich beispielsweise ein Streifenpolizist im Funkbereich der DECT-Sende-/Empfangseinrichtung der in seinem Kraftfahrzeug eingebauten Basisstation frei bewegen und freihändig Funkkontakt zur Funkzentrale aufrechterhalten. Dies ist sowohl für Polizisten mit Streifenwagen als auch für Polizisten mit Kraftrad von Vorteil. Durch die Verwendung des digitalen Schnurlosübertra-Vorteil. Durch die Verwendung des digitalen Schnurlosübertragungsverfahrens nach DECT ist die Funkübertragung zwischen Basisstation und Endgerät abhörsicher realisierbar.

In einer günstigen Ausgestaltung einer solchen Telekommunikationseinrichtung wird immer, wenn sowohl die Basisstation als auch das freihändig tragbare Endgerät aktiviert sind, eine Verbindung zwischen diesen aufgebaut und aufrecht erhalten.

Eine weitere Ausgestaltung einer solchen Telekommunikationseinrichtung hat mindestens zwei Endgeräte, die jeweils mit der Basisstation verbindbar sind. Vorzugsweise sind diese Endgeräte in der Basisstation nach Art einer Konferenzschaltung verbindbar, so daß eine Verbindung zwischen den einzelnen Endgeräten der Telekommunikationseinrichtung möglich ist und außerdem alle angeschlossenen Endgeräte über die weitere Sende-/Empfangseinrichtung und den Funkverkehr größerer Reichweite mit einem fernen Endgerät verbunden sein können. Wenn bei dieser Ausgestaltungsform immer eine Verbindung zwischen Endgerät und Basisstation aufgebaut und aufrecht erhalten wird, wenn Endgerät und Basisstation aktiviert, d.h. eingeschaltet sind, können sich mehrere Benutzer wahlweise in eine Funkverbindung mit einem fernen Endgerät einschalten und außerdem ist durch einfaches Einschalten von mehreren Endgeräten ein Verbindungsaufbau zwischen diesen Endgeräten realisierbar. Dadurch können sich beispielsweise zwei Polizisten, die als Besatzung eines Einsatzfahrzeugs mit Basistation unterwegs sind, gemeinsam oder wahlweise per Funk mit einer Einsatzzentrale und unabhängig hiervon mit einander unterhalten, falls sie sich an unterschiedlichen Orten im DECT-Sende-/Empfangsbereich der Basisstation befinden.

Nachstehend wird die erfindungsgemäße netzungebundene Telekommunikationsanlage anhand von Ausführungsbeispielen unter Bezugnahme auf die Figuren erläutert.

Es zeigt:
- Fig. 1: ein Übersichtsbild einer erfindungsgemäßen netzungebundenen Telekommunikationsanlage mit drei Endgeräten;
- Fig. 2: die Blockdarstellung einer Telekommunikationsanlage gemäß Fig. 1;
- Fig. 3: eine andere Ausgestaltungsform einer Telekommunikationsanlage;
- Fig. 4: eine spezielle Ausgestaltungsform eines Endgerätes; und
- Fig. 5: die Blockdarstellung einer weiteren Ausgestaltungsform einer erfindungsgemäßen Telekommunikationsanlage.

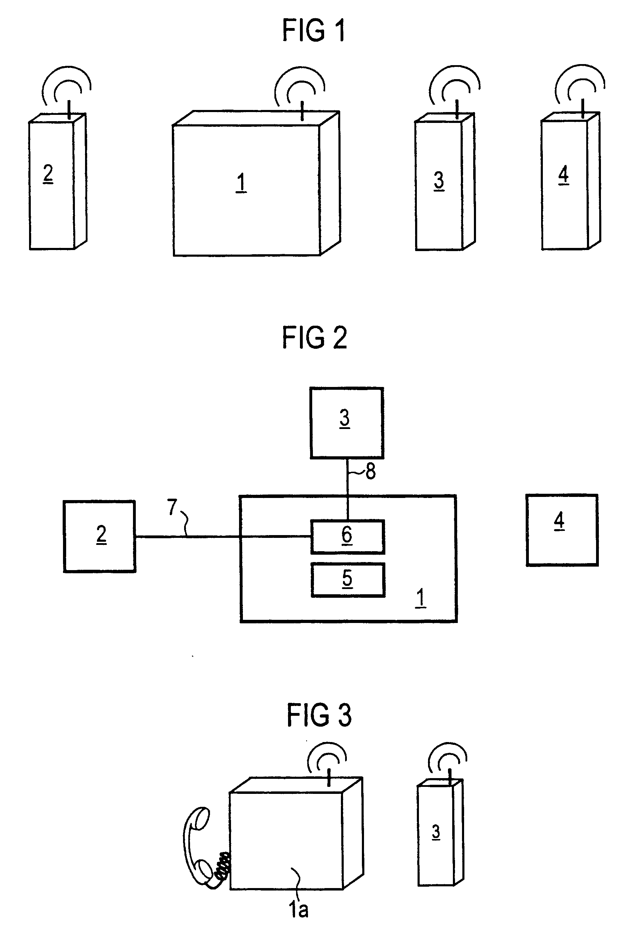

Fig. 1 zeigt eine netzungebundene Telekommunikationsanlage mit drei Endgeräten 2, 3 und 4 sowie einer zentralen Vermittlungseinrichtung 1. Die Vermittlungseinrichtung 1, sowie die dargestellten Endgeräte 2, 3 und 4 sind tragbar ausgestaltet und jeweils mit einer Sende-/Empfangseinrichtung versehen, um schnurlose Verbindungen zwischen der zentralen Vermittlungseinrichtung 1 und den Endgeräten 2, 3 und 4 auf- bzw. abbauen zu können.

Die Telekommunikationsanlage nach Fig. 1 ist in Fig. 2 in Form eines Blockschaltbildes dargestellt, wobei innerhalb der zentralen Vermittlungseinrichtung 1 eine zentralen Vermittlungssteuerung 5 gezeigt ist, sowie eine steuerbare Verbindungseinrichtung 6, wie z.B. ein Koppelfeld. Mit Hilfe der zentralen Vermittlungssteuerung 5 und des Koppelfeldes 6 ist es möglich, beispielsweise eine Verbindung 7 zwischen dem Endgerät 2 und dem Koppelfeld 6 und eine Verbindung 8 zwischen dem Endgerät 3 und dem Koppelfeld 6 aufzubauen. Das Koppelfeld 6 ist geeignet, die Verbindung 7 und die Verbindung 8 zu koppeln, um damit eine Verbindung zwischen dem Endgerät 2 und dem Endgerät 3 zu realisieren.

In gleicher Weise sind auch Verbindungen zwischen anderen Endgeräten 2, 3 und 4 auf- bzw. abbaubar.

Fig. 3 zeigt eine besondere Ausgestaltungsform einer Telekommunikationsanlage, mit einer zentralen Vermittlungseinrichtung 1a, in die ein Endgerät integriert ist. Außerdem ist, stellvertretend für mehrere zusätzlich vorsehbare Endgeräte ein Endgerät 3 dargestellt.

Bei einer derart ausgestalteten netzungebundenen Telekommunikationsanlage ist ein Verbindungsaufbau von der mit Endgerät ausgestatteten Vermittlungseinrichtung 1a zu dem Endgerät 3 möglich. Selbstverständlich ist, falls weitere Endgeräte vorgesehen sind, auch ein Verbindungsaufbau zwischen anderen externen Endgeräten möglich.

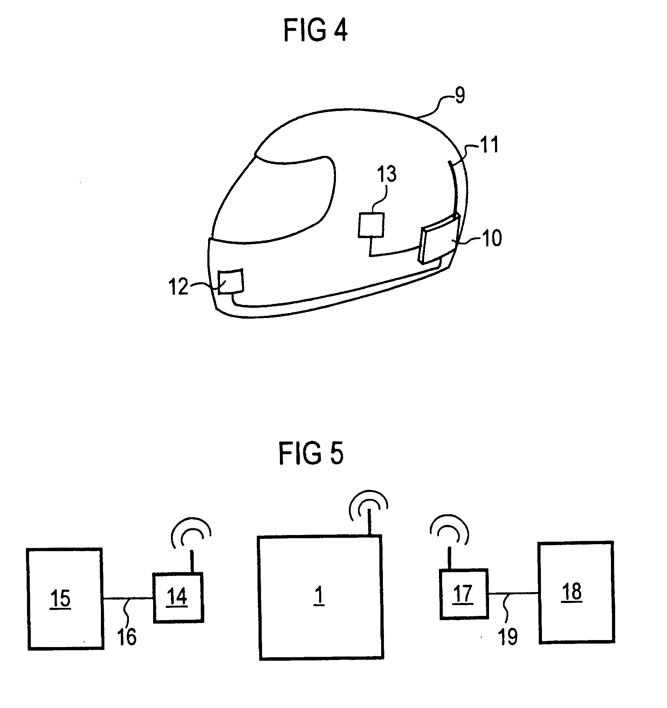

Fig. 4 zeigt eine spezielle Ausgestaltungsform eines Endgerätes einer erfindungsgemäßen Telekommunikationsanlage. Dargestellt ist ein Schutzhelm, der beispielsweise als Kopfbedekkung eines Motorradfahrers oder Autorennfahrers üblich ist. In diesen Helm 9 sind eine Sende-/Empfangseinrichtung 10 und eine Sende-/Empfangsantenne 11 integriert. Außerdem sind als Hör-/Sprecheinrichtung ein Mikrofon 12 sowie ein Kopfhörer 13 integriert. Um die für die Erfindung wesentlichen Komponenten besser erkennen zu können, ist der dargestellte Helm 9 mit transparenter Außenhülle dargestellt. Selbstverständlich kann es auch ausreichen, das Mikrofon 12 und den Kopfhörer 13 in den Helm einzubauen und die Sende-/Empfangseinrichtung 10 einschließlich Antenne 11 über eine Leitung mit dem Helm zu verbinden.

Fig. 5 zeigt die Blockdarstellung einer besonderen Ausgestaltungsform einer Telekommunikationsanlage gemäß der Erfindung. In Fig. 5 ist hierzu eine zentrale Vermittlungseinrichtung 1 dargestellt. Außerdem sind zwei Endgeräte 15 und 18 gezeigt, die jeweils über eine Anschlußleitung 16 bzw. 19 an eine speziell ausgestaltete Teilnehmeranschlußeinrichtung 14 bzw. 17 angeschlossen sind. Die Teilnehmeranschlußeinrichtung 14 sowie die Teilnehmeranschlußeinrichtung 17 sind jeweils mit einer Sende-/Empfangseinrichtung ausgestattet, um einen Schnurlos-Verbindungsaufbau zu der zentralen Vermittlungseinrichtung 1 zu ermöglichen.

## Patentansprüche

1. Netzungebundene Telekommunikationsanlage mit mindestens zwei Endgeräten (2, 3, 4, 9) und mit einer zentralen Vermittlungseinrichtung (1, 1a), die eine Sende-/Empfangseinrichtung hat, die schnurlose Verbindungen zu den Endgeräten (2, 3, 4, 9) aufbaut, wobei jedem Endgerät ebenfalls eine Sende-/Empfangseinrichtung zugeordnet ist, und auf Anforderung eines der Endgeräte (1a, 2, 3, 4, 9) eine Verbindung zwischen diesem Endgerät und dem anderen Endgerät auf- bzw. abbaut, dadurch **gekennzeichnet,** daß
a) die zentrale Vermittlungseinrichtung (1, 1a) ortsunabhängig betreibbar ist,
b) in die zentrale Vermittlungseinrichtung ein Endgerät baulich integriert ist.

2. Netzungebundene Telekommunikationsanlage nach Anspruch 1, **gekennzeichnet** durch eine Verbindung zwischen Endgerät (2, 3, 4, 9) und zentraler Vermittlungseinrichtung (1, 1a) gemäß einem digitalen Schnurlos-Telekommunikationsübertragungsverfahren.

3. Netzungebundene Telekommunikationsanlage nach Anspruch 2, **gekennzeichnet** durch eine Verbindung zwischen Endgerät (2, 3, 4, 9) und zentraler Vermittlungseinrichtung (1, la) gemäß dem digitalen Schnurlostelekommunikationsstandard DECT.

4. Netzungebundene Telekommunikationsanlage nach einem der vorhergehenden Ansprüche, dadurch **gekennzeichnet,** daß ein Endgerät (9) mit Sende-/Empfangseinrichtung (10) als am Kopf tragbare Hör-/Sprechgarnitur (10, 11, 12, 13) ausgebildet ist.

5. Netzungebundene Telekommunikationsanlage nach Anspruch 4, dadurch **gekennzeichnet,** daß die Hör-/Sprechgarnitur (10, 11, 12, 13) in eine Kopfbedeckung (9) integriert ist.

6. Netzungebundene Telekommunikationsanlage nach einem der Ansprüche 1 bis 5, dadurch **gekennzeichnet,** daß die zentrale Vermittlungseinrichtung (1, 1a) zu ihrer Energieversorgung an die Stromversorgung eines Kraftfahrzeugs anschließbar ist.

7. Netzungebundene Telekommunikationsanlage nach einem der Ansprüche 1 bis 5, dadurch **gekennzeichnet,** daß die zentrale Vermittlungseinrichtung (1, 1a) zu ihrer Energieversorgung mit einer Batterie verbindbar ist.

8. Netzungebundene Telekommunikationsanlage nach einem der Ansprüche 1 bis 5, dadurch **gekennzeichnet,** daß die zentrale Vermittlungseinrichtung (1, 1a) zu ihrer Energieversorgung an ein Stromnetz anschließbar ist.

9. Netzungebundene Telekommunikationsanlage nach einem der vorhergehenden Ansprüche, dadurch **gekennzeichnet,** daß ein Endgerät (15, 18) an eine Teilnehmeranschlußeinheit (14, 17) drahtgebunden anschließbar ist, wobei die hierfür vorgesehene Teilnehmeranschlußeinheit (14, 17) eine Sende-/Empfangseinrichtung hat, um eine schnurlose Verbindung zu der zentralen Vermittlungseinrichtung zu ermöglichen.

10. Netzungebundene Telekommunikationsanlage nach Anspruch 9, dadurch **gekennzeichnet,** daß das drahtgebunden anzuschließende Endgerät ein Modem enthält.

11. Netzungebundene Telekommunikationsanlage nach einem der vorhergehenden Ansprüche, dadurch **gekennzeichnet,** daß die zentrale Vermittlungseinrichtung (1, 1a) eine weitere Sende-/Empfangseinrichtung für einen Funkverkehr vergrößerter Reichweite aufweist.

## Claims

1. Network-independent telecommunications system having at least two terminals (2, 3, 4, 9) and having a central switching system (1, 1a) which has a transceiver which sets up cordless connections to the terminals (2, 3, 4, 9), each terminal also being allocated a transceiver, and sets up or clears down a connection between this terminal and the other terminal when requested by one of the terminals (1a, 2, 3, 4, 9), characterized in that
a) the central switching system (1, 1a) can be operated independently of location,
b) a terminal is constructionally integrated in the central switching system.

2. Network-independent telecommunications system according to Claim 1, characterized by a connection between terminal (2, 3, 4, 9) and central switching system (1, 1a) in accordance with a digital cordless telecommunication transmission method.

3. Network-independent telecommunications system according to Claim 2, characterized by a connection between terminal (2, 3, 4, 9) and central switching system (1, 1a) in accordance with the digital cordless telecommunication standard DECT.

4. Network-independent telecommunications system according to one of the preceding claims, characterized in that a terminal (9) with transceiver (10) is constructed as a headset (10, 11, 12, 13) which can be worn on the head.

5. Network-independent telecommunications system according to Claim 4, characterized in that the headset (10, 11, 12, 13) is integrated into headgear (9).

6. Network-independent telecommunications system according to one of Claims 1 to 5, characterized in that the central switching system (1, 1a) can be connected to the power supply of a motor vehicle to supply it with energy.

7. Network-independent telecommunications system according to one of Claims 1 to 5, characterized in that the central switching system (1, 1a) can be connected to a battery to supply it with energy.

8. Network-independent telecommunications system according to one of Claims 1 to 5, characterized in that the central switching system (1, 1a) can be connected to a mains system to supply it with energy.

9. Network-independent telecommunications system according to one of the preceding claims, characterized in that a terminal (15, 18) can be connected by wires to a subscriber line unit (14, 17), the subscriber line unit (14, 17) provided for this purpose having a transceiver to provide for a cordless connection to the central switching system.

10. Network-independent telecommunications system according to Claim 9, characterized in that the terminal to be connected by wires contains a modem.

11. Network-independent telecommunications system according to one of the preceding claims, characterized in that the central switching system (1, 1a) has a further transceiver for radio traffic with increased range.

## Revendications

1. Installation de télécommunications non reliée à un réseau, comportant au moins deux terminaux (2, 3, 4, 9) et comportant un dispositif (1, 1a) central de commutation qui a un dispositif d'émission/réception qui établit des liaisons sans fil avec les terminaux (2, 3, 4, 9), un dispositif d'émission/réception étant associé également à chaque terminal, et une liaison étant, sur demande de l'un des terminaux (1a, 2, 3, 4, 9), établie ou interrompue entre ce terminal et l'autre terminal, caractérisée en ce que
a) le dispositif (1, 1a) central de commutation peut être exploité indépendamment du lieu,
b) un terminal est intégré par construction au dispositif central de commutation.

2. Installation de télécommunications non reliée à un réseau suivant la revendication 1, caractérisée par une liaison entre le terminal (2, 3, 4, 9) et le dispositif (1, 1a) central de commutation suivant un procédé de transmission de télécommunications numériques sans fil.

3. Installation de télécommunications non reliée à un réseau suivant la revendication 2, caractérisée par une liaison entre un terminal (2, 3, 4, 9) et un dispositif (1, 1a) central de commutation suivant la norme DECT de télécommunications numériques sans fil.

4. Installation de télécommunications non reliée à un réseau suivant l'une des revendications précédentes, caractérisée en ce qu'un terminal (9) comportant un dispositif (10) d'émission/réception est réalisé en casque (10, 11, 12, 13) téléphonique pouvant être porté sur la tête.

5. Installation de télécommunications non reliée à un réseau suivant la revendication 4, caractérisée en ce que le casque (10, 11, 12, 13) téléphonique est intégré à un couvre-chef (9).

6. Installation de télécommunications non reliée à un réseau suivant l'une des revendications 1 à 5, caractérisée en ce que le dispositif (1, 1a) central de commutation peut être raccordé, en vue de son alimentation en énergie, à l'alimentation en courant d'un véhicule automobile.

7. Installation de télécommunications non reliée à un réseau suivant l'une des revendications 1 à 5, caractérisée en ce que le dispositif (1, 1a) central de commutation peut être relié, en vue de son alimentation en énergie à une batterie.

8. Installation de télécommunications non reliée à un réseau suivant l'une des revendications 1 à 5, caractérisée en ce que le dispositif (1, 1a) central de commutation peut être raccordé, en vue de son alimentation en énergie, à un réseau de courant.

9. Installation de télécommunications non reliée à un réseau suivant l'une des revendications précédentes, caractérisée en ce qu'un terminal (15, 18) peut être raccordé par fil à une unité (14, 17) de raccordement d'abonné, l'unité (14, 17) de raccordement d'abonné prévue à cet effet ayant un dispositif d'émission/réception afin de permettre une liaison sans fil avec le dispositif central de commutation.

10. Installation de télécommunications non reliée à un réseau suivant la revendication 9, caractérisée en ce que le terminal à raccorder par liaison filaire contient un modem.

11. Installation de télécommunications non reliée à un réseau suivant l'une des revendications précédentes, caractérisée en ce que le dispositif (1, 1a) central de commutation comporte un dispositif d'émission/réception supplémentaire pour une radiocommunication de plus grande portée.
